# EUROPEAN PATENT APPLICATION

(11) **EP 3 454 006 A1**
(43) Date of publication of application: **13.03.2019**
(21) Application number: 17382604.1
(22) Date of filing: 12.09.2017
(51) Int. Cl.: G01C 3/32, G01S 5/16

(54) **A METHOD, A SYSTEM AND A COMPUTER PROGRAM FOR MEASURING A DISTANCE TO A TARGET**

(71) Applicant: Fundació Institut de Ciències Fotòniques, 08860 Castelldefels (Barcelona) (ES); Institució Catalana de Recerca I Estudis Avançats, 08010 Barcelona (ES)
(72) Inventor: MONTAGUT, Marc, 08860 CASTELLDEFELS (ES); PHILIPPET, Laurent, 08860 CASTELLDEFELS (ES); FERRANDO, Sergi, 08860 CASTELLDEFELS (ES); QUIDANT, Romain, 08860 CASTELLDEFELS (ES)
(74) Representative: Ponti & Partners, S.L.P

(57) **Abstract**

The present invention relates to a method for measuring a distance to a target, comprising:
a) supplying an excitation signal to a heating element in thermal contact with a thermo-optical material of a thermo-optical lens to change the focal length of said thermo-optical lens to focus on a target; and
b) analysing said supplied excitation signal or a control signal originating the same, to determine, based at least on the magnitude of said analysed signal, a distance between said focused target and one of said thermo-optical lens and an optical element arranged in an optical path going from the target to the thermo-optical lens.

A system and a computer program adapted to implement the method of the invention are also provided by the present invention.

## Description

### FIELD OF THE INVENTION

The present invention relates, in a first aspect, to a method for measuring a distance to a target, based on the operation of a thermo-optical lens without the need of emitting a probing light on the target or the need of using any sensor specific for performing the distance measuring.

The present invention also relates, in a second aspect, to a system for measuring a distance to a target, adapted to implement the method of the first aspect of the invention.

In a third aspect, the present invention relates to a computer program including code instructions that when executed on at least one processor implement the steps of the method of the first aspect of the present invention.

### BACKGROUND OF THE INVENTION

There are different proposals in the state of the art intended to perform distance measurements to a target. Some of said proposals are disclosed in the patent documents listed below.

US5764786A discloses a moving object measurement device employing a three-dimensional analysis to obtain characteristics of the moving object, including a distance calculation based on the use of two cameras or stereoscopy. Using two cameras for distance analysis requires to have two separated full optical systems working at the same time, and both cameras must focus on the same object to get information about distance, so distance information from various objects at the same time cannot be obtained.

US4827303A discloses a distance measuring device for automatically detecting an object distance on the basis of triangulation by unidirectional optical scanning, generally by changing the angle of a camera. When using only one camera and different angles for distance measuring two main inconveniences appear: a mechanical system is needed to change position making it unsuitable for any portable device, real time calculation is unavailable and images need to be post processed.

US6426775B1 and US6792203B1 disclose calculating distance to an object by analysing the variation of the object's luminance. Using light to measure distance to an object requires to calculate the relative brightness between the object and the apparatus, a pre-lightning is needed before every calculation in order to calibrate the scene, camera focus has to point into a main object, and distances to the rest of objects are calculated by their relative brightness. This method only works under low ambient light conditions.

US3652161A discloses an apparatus and method for measuring distance in which a coarse measurement of the distance is made by detecting the time of travel of a pulse, such as a laser pulse.

US3901597A discloses measuring distance to an object by using a focusing lens to direct laser optical energy into a focal saddle, where the distance measurement is determined by the position of the focusing lens where an object is present inside said focal saddle.

US6697147B2 also discloses a distance measurement method using a laser source, but in this case the distance measurement is performed by calculating a position relative to a target analysing an acquired image including three or more points formed on a target by respective laser beams.

All of said proposals based on laser beams require of complex, expensive and specific mechanisms for distance measuring, including one or more laser sources, optics, and sensors able to gather information from one or more collimated beams that scatters light on the surface of an object and/or is reflected thereon. Moreover, the information or data gathered by the sensors is presented as a number and does not provide any image of what is being measured.

US4983033A discloses an automatic range finder for a camera for setting the focus position of the camera to correspond to the closest object to the camera within a specified field of view, where the distance to the object is determined by source light triangulation. Triangulation starts from the same principle as stereoscopy, and therefore shares the same drawbacks with it. In this case an optical system and a light source is included in the system. The optical system will perform an auto focus to the first object that reflects light from the light source. Through triangle equations, a distance is calculated from the first object.

It is, therefore, necessary to provide an alternative to the state of the art which covers the gaps found therein, by providing a method and a system for measuring a distance to a target which does not have the above mentioned drawbacks of the proposals of the prior art, and which particularly constitutes a simplified approach for distance measuring and improves the results obtained therewith.

### SUMMARY OF THE INVENTION

To that end, the present invention relates, in a first aspect, to a method for measuring a distance to a target, comprising:
a) supplying an excitation signal to a heating element in thermal contact with a thermo-optical material of a thermo-optical lens to change the focal length of said thermo-optical lens to focus on a target; and
b) analysing said supplied excitation signal or a control signal originating the same, to determine, based at least on the magnitude of said analysed signal, a distance between said focused target and one of said thermo-optical lens and an optical element arranged in an optical path going from the target to the thermo-optical lens.

The method of the present invention constitutes a passive measuring method as no probing light is emitted on the target, and also does not need of the inclusion of any sensor/detector or mechanism specific for directly or indirectly performing the distance measuring, as only the analysis of the excitation signal supplied to focus the thermo-optical lens is needed, which drastically simplifies the proposals of the state of the art.

In the present document, the terms probing light have to be understood as meaning light which properties or intrinsic or associated information is used for the distance measuring process, as it happens with the conventional time of travel distance measuring methods. In the present invention, no probing light is used at all, but only, in some cases, an illumination light to sufficiently illuminate the target in case ambient light is not enough for that purpose.

For an embodiment, the method of the first aspect of the present invention comprises supplying, as said excitation signal, an electric excitation signal to the heating element which is an electric-heating element in thermal contact with a thermo-optical material of the thermo-optical lens. Regarding this embodiment, EP3149526A1, which contents are incorporated herein by reference, discloses a thermally modulated optical lens which is focused on one or more targets by transferring heat from an electric-heating element (called therein electrically resistive element) in thermal contact with a thermo-optical material of the thermo-optical lens. No distance measuring is taught nor even suggested in EP3149526A1.

For an alternative embodiment, the method of the first aspect of the present invention comprises supplying, as said excitation signal, a light excitation signal to the heating element which is a photo-heating element in thermal contact with a thermo-optical material of the thermo-optical lens.

According to an implementation of said alternative embodiment, the method of the first aspect of the present invention comprises supplying said control signal to a controllable light source to obtain said light excitation signal, wherein, for a variant of said implementation, the control signal is an electric control signal and the controllable light source is an electrically controlled light source.

According to an embodiment, the above mentioned photo-heating element comprises one or more photo absorbing particles in thermal contact with a thermo-optical material of the thermo-optical lens, and the method of the first aspect of the present invention comprises controlling the controllable light source, by means of said control signal, for illuminating the one or more photo absorbing particles with at least one spectral component which can be absorbed by the one or more photo-absorbing particles, so that heat is generated thereby and transferred to the thermo-optical material. Regarding this embodiment, EP3120186A1, which contents are incorporated herein by reference, discloses an adaptive photo thermal lens which is focused on one or more targets by illuminating photo absorbing particles to generate and transfer heat to a thermo-optical material in thermal contact with the photo absorbing particles. No distance measuring is taught nor even suggested in EP3120186A1.

According to an embodiment, the method of the first aspect of the present invention comprises measuring a plurality of distances to a corresponding plurality of targets, preferably simultaneously, wherein:
said step a) comprises supplying a plurality of (preferably independent) excitation signals respectively to a plurality of (preferably independent) heating elements in thermal contact with thermo-optical materials of a corresponding plurality of (preferably independent) thermo-optical lenses to change the focal length of each of the plurality of thermo-optical lenses to focus on each of said targets of the plurality of targets; and
said step b) comprises analysing said supplied excitation signals or control signals originating the same, to determine, based at least on the magnitude of said analysed signals, said plurality of distances between each of the focused targets and:
   - each of the thermo-optical lenses; or
   - an optical element arranged in an optical path going from the target to the thermo-optical lens.

According to an implementation of said embodiment, the above mentioned corresponding plurality of thermo-optical lenses are arranged forming a 2D lens array.

Said 2D lens array can be formed on surfaces with any shape, whether flat or curved, and with any thickness, depending on the embodiment. For example, for an embodiment, the 2D array is arranged on a spherical surface so that light is received from space locations surrounding the spherical surface. This embodiment could be useful as part of a navigation system for a robot, such as a drone, particularly to detect obstacles all around it and measure their distances thereto.

For a preferred embodiment, the method of the first aspect of the present invention further comprises acquiring images of the focused targets by means of an image sensor arranged and configured to receive light coming from the target or targets once said light has passed through the thermo-optical lens or lenses or has been reflected thereon, and to sense images of said target or targets from the collected light, wherein at step a) the above mentioned change of the focal length of the thermo-optical lens to focus on a target or targets refers to focus said target or targets on said image sensor.

For an implementation of said preferred embodiment, the above mentioned optical element, particularly an objective, is placed between the target(s) and the thermo-optical lens, wherein the distance(s) determined at step b) is/are between the focused target(s) and said objective, the distance between the objective and the thermo-optical lens and image sensor being a known-in-advance distance, which is a generally fixed distance (although the use of movable objectives is also covered by the present invention).

Other types of optical elements, in addition or instead to said objective, can be included in the above mentioned optical path, for some embodiments, such as diaphragms, filters, other types of lenses, etc., the method of the present invention also comprising, for some embodiments, measuring the distance from the target to each of said other types of optical elements.

For said implementation of said preferred embodiment, when capturing an image of a scene with the above mentioned 2D lens array overlapping a corresponding 2D array of effective pixels of said image sensor, different image portions of said scene are sensed in each selected effective pixel of the image sensor, so that the whole image of the scene is composed by the array of image portions.

For an alternative implementation of said preferred embodiment, no objective is placed between the target(s) and the thermo-optical lens, wherein the distance(s) determined at step b) is/are between the target(s) and the thermo-optical lens. In this case, when capturing an image of a scene with the above mentioned 2D lens array arranged in correspondence to a corresponding 2D array of effective pixels of said image sensor, the same image (including the whole scene) is sensed in each selected effective pixel of the image sensor, but with different depth planes of the scene focused on the respective selected effective pixels.

For said alternative implementation, the 2D lens array is not necessarily overlapping the image sensor or in close distance thereto. In fact, for some cases, there may be optics between the two to ensure that the image coming from each individual lens of the 2D array is sent over the entire surface of the array of sensor pixels.

According to an embodiment, when the corresponding plurality of thermo-optical lenses are arranged forming a 2D lens array in front of a corresponding 2D array of effective pixels of the image sensor, the method of the first aspect of the present invention comprises performing a three-dimensional reconstruction from the images acquired with the image sensor and from the determined distances determined at step b).

For the above mentioned implementation of the preferred embodiment for which an objective is placed between the target(s) and the thermo-optical lens, the above mentioned three-dimensional reconstruction also comprises the use of information regarding the positions of the different acquired image portions in the 2D array of effective pixels of the image sensor.

The method of the first aspect of the present invention further comprises, for an embodiment, performing previously to steps a) and b), a calibration process for each of the thermo-optical lenses, wherein said calibration process comprises separately supplying a plurality of excitation signals to a plurality of corresponding heating elements to change the focal lengths of the thermo-optical lenses to focus on different targets at different distances, and build a calibration relationship data structure univocally relating, for each thermo-optical lens, each supplied excitation signal, or control signal originating the same, with the distance between the corresponding focused target and one of the respective thermo-optical lens and optical element arranged in the corresponding optical path, and wherein the determination of the distance of step b) is performed by looking up in said calibration relationship data structure the value of the magnitude of the analysed signal to find a univocally related distance value therein.

Preferably, the method of the first aspect of the present invention comprises building the calibration relationship data structure including only those pairs of values, distance versus supplied excitation signal or control signal originating the same, which follow any kind of fitting interpolation, such as one following a linear evolution, as long as it is repetitive and quantitative, so that a high accuracy in determining the distance to the target is achieved.

Optionally, for example by interpolating those pairs of values following a linear evolution, additional intermediate pairs of values can be obtained (not obtained during the above described calibration process), so that when a thermo-optical lens is focused on a target by supplying, to the associated heating element, the value of the magnitude of an excitation signal which is not one of the plurality of excitation signals supplied during the calibration process, can be found in one of those intermediated pairs of values, and hence the corresponding distance value is obtained.

As, for an embodiment, the present invention working under a "pixelated" lens (the above mentioned 2D lens array) various measurements can be taken at once, not only the distance between the object and the camera/lens can be calculated but also between objects in the scene, both in a lateral dimension (orthogonal to the optical axis of the lens) and also on an imaginary straight line joining two objects, by a triangulation process performed whether from relative inclination angles between lenses of the 2D lens array which are tilted with different inclinations or, in case the lenses of the 2D lens array are not inclined but occupying the same plane, from relative angles of different light rays impinging on the lenses (determined, for example, from their corresponding vanishing points).

Various measurements can take place during the focusing process, and an individual calibration is needed for every lens of the 2D lens array.

According to an embodiment, the method of the first aspect of the present invention comprises performing an autofocus process during or previously to step a) up to find an optimal focal length for the thermo-optical lens to focus on the target, and using the excitation signal corresponding to said optimal focal length in steps a) and b).

Alternatively, or complementarily, a manual focus adjustment can be performed to find said optimal focal length.

Generally, said optimal focal length is determined with the aid of the above mentioned image sensor, particularly based on detecting the highest image quality on a corresponding display, detected through object sharpness.

The present invention also relates, in a second aspect, to a system for measuring a distance to a target, adapted to implement the method of the first aspect of the invention, and which comprises at least:
- a heating element;
- a thermo-optical lens comprising a thermo-optical material in thermal contact with said heating element to change the focal length of said thermo-optical lens when heated by said heating element;
- an excitation signal generating unit adapted and arranged to supply an excitation signal to said heating element to heat the thermo-optical material to change the focal length of the thermo-optical lens to focus on a target; and
- an analysing unit configured and arranged to analyse said supplied excitation signal or control signal originating the same, to determine, based at least on the magnitude of said analysed signal, a distance between said focused target and one of said thermo-optical lens and an optical element arranged in an optical path going from the target to the thermo-optical lens.

Said analysing unit generally comprises one or more processors which process data representing the magnitude of the excitation signals and determines the distance to the focused target or targets by calculating the same, preferably in real time or near-real time, from said data processing, said calculation generally including the above mentioned looking up in the calibration data structure which is stored in a memory accessible by the processor(s).

According to an embodiment, the system of the second aspect of the invention further comprises an image sensor arranged and configured to receive light coming from the target or targets once said light has passed through the thermo-optical lens or lenses or has been reflected thereon, and to sense images of the target or targets from the collected light.

For different embodiments, the system of the second aspect of the invention comprises some or all of the elements referred in the above description of corresponding embodiments of the method of the first aspect of the present invention, such as the image sensor, the camera objective, and the 2D array of thermo-optical lenses.

For an embodiment, the system of the second aspect of the invention comprises a plurality of thermo-optical lenses and further comprises a user input device for allowing a user to make selection of the thermo-optical lens or lenses which focus(es) is/are to be adjusted.

For an embodiment, the system of the second aspect of the invention further comprises a screen for displaying images of one or more objects placed at the focused targets.

According to an embodiment, the system of the second aspect of the invention comprises a touchscreen which includes both said screen and said user input device. For an embodiment, said touchscreen displays the acquired image in a grid each of user-actionable areas, and optionally also displays the values of the measured distances to each target.

For different embodiments, the system of the second aspect of the present invention further comprises at least one of the following optics: microscope optics, macroscope/telescope optics and standard photographic optics (including a normal lens and/or a wide angle lens), place between the thermo-optical lens or lenses and the image sensor.

Microscope optics are used for the study of microscopic objects, leading to micrometric shifts of the focal plane in order to focus said objects. Telescope optics capable of addressing kilometric distances lead to focal plane shifts of the order of kilometres or hundreds of meters. Standard photographic optics in front of the thermo-optical lens produces displacements in focal plane in the range of the tens or hundreds of centimetres.

For an embodiment, the system comprises a camera comprising the above mentioned image sensor, and the rest of elements of the system of the second aspect of the invention.

For a variant of said implementation, said camera is a digital camera including one or more processors for processing the acquired image information and also to control the operation of the camera, wherein said one or more processors are those above mentioned which are included in the analysing unit of the system of the second aspect of the invention. In other words, no additional processors, and in fact no additional hardware or mechanical element, are added to the camera to perform the distance measuring, but only software which makes the processor(s) able to perform further functions to implement the above described data processing and calculation for performing distance measuring according to the method of the first aspect of the invention.

According to an embodiment, the system comprises a portable computing device comprising the above mentioned screen, user input device, and camera, the latter being a built-in camera of the portable computing device.

Depending on the embodiment, said portable computing device is one of a smartphone, a tablet and a laptop.

For an embodiment, said camera is adapted to acquire video sequences of images.

Image sensors operating under any light wavelength can be used according to the present invention, including the combination of more than one wavelength at a time (by including pixels sensitive to different wavelengths), for both visible and invisible (infrared, ultraviolet) light. In some cases, distances to inner surfaces of an object can be measured, for example by using an image sensor operating in the infrared wavelength for an object having an inner infrared source, such as in case of humans or animals.

In a third aspect, the present invention relates to a computer program including code instructions that when executed on at least one processor implement the steps of the method of the first aspect of the present invention according to any of the above described embodiments, including the control of the operation of an excitation signal generating unit to supply excitation signals, to implement step a) and, optionally, also to implement part of the above described calibration process, and the analysis of data representing at least the magnitude of the supplied excitation signals to implement step b) and, optionally, also to implement the rest of the above described calibration process, including the building of and looking up in the calibration data structure.

For an embodiment, the computer program of the third aspect of the present invention also comprises code instructions for implementing the above described three-dimensional reconstruction.

Algorithms implementing several pieces of the computer program of the third aspect of the present invention are provided by the present invention, to be processed by the processor(s) of the system of the second aspect of the invention and installed in memory(s) operatively connected thereto.

With the present invention, distances to objects from a real time image can be measured simultaneously, and even to calculate curved surfaces (precision dependent on lens resolution, i.e. on the number of elements of the lens array), from measured distances to different points of the curved surface.

The present invention has many applications, such as those listed below:
- Quality control 3D geometries for industrial processes. Leveraging existing image processing set-ups and algorithms but providing an extra capacity of height differentiation with real time image detection of large areas.
   - Quality control of dimensional parameters is normally achieved with cameras or lasers that provide different bits of information.
   - The present invention is capable of providing actual images of control samples at the same time it generates topographic data.
   - An example would be wood industry. To ensure raw wooden boards have no defects quality control checks its flatness and grain, in this case the present invention is able to provide data about either the board geometry or its texture.
- 3D imaging.
   - From a stereoscopic approach, allowing different captures with the same sensor and optics or
   - Reconstructing a 3D image from the topographic information captured directly with the system of the second aspect of the invention from a single exposure.
- The system of the present invention can work as a common camera with the added feature of enabling the user to focus on more than one object at the same time to achieve a completely new set of aesthetic results, together with the distance measures to the focused objects.
- Cinematography and Photography, as the present invention can provide real time images combined with individually controlled focus in an overlapped grid, as dense as the amount of lenses in the 2D array, together with the distance measures to the focused objects.
   - Provision of development kits allowing professionals to exploit the new capacity of controlling the images in the effective pixels (or elements of the interface grid) of the interface treating them individually.
   - In real time recording, a new supporting point is found for the artists as they can now focus into any element in the scene, opening a new range of possibilities in filming.
- Empowering 360° cameras with the 3D/distance information provided by the present invention to be able to address distances to objects all around the optical system. This could be integrated for example, in robots, autonomous vehicles or drones. In the case of flying drones, the image and collection of distances could be in all directions (spherical) combining the information from 2 perpendicularly placed 360° cameras. While this type of system may not be ideal for real time steering of the drone or vehicle compared to other collision-avoiding systems, it could provide an integral 3D image of the environment, not achievable by any other system with a single shot, which could even be fed as a background set to the navigation system of the device.
- As for post-processed images, the present invention is able to provide extra information about the scene giving ranges of measures to every point recorded thanks to its multiple focusing.
   - Potential use as an environment, safety and rescue applications, for instance allowing the detection of accumulated snow with danger of avalanches. Also, providing 3D information on the position of rescue teams in mountainous regions.
- The present invention can work at different scales depending on the optics used: from microscopic to topography/geography relevant situations. The optics will limit the resolution but as a general rule, displacement of focus is small for microscopic scenarios (with high resolution) and it can work also in macroscopic/telescopic frames from planes, drones and alike, for instances, with still relevant resolution limited mainly by the optics.
- All the elements involved are suitable to be integrated in a mobile phone camera.
- The 3D/distance measurement can work outside the visible light range. It could be especially relevant to night-view systems.

### BRIEF DESCRIPTION OF THE FIGURES

In the following some preferred embodiments of the invention will be described with reference to the enclosed Figures. They are provided only for illustration purposes without however limiting the scope of the invention.
Figure 1 shows images of a 3D sample obtained through a microscope which includes the system of the second aspect of the invention, for an embodiment, where three different targets constituted by respective pillars with different heights have been selected (boxed in boxes 1, 2 and 3).
Figure 2 schematically shows a setup of the system of the second aspect of the present invention, for an embodiment for which the system comprises a camera and is applied to focus, acquire images and measure distances to targets located at different known distances, wherein said targets are post signs and the distances are displayed on the posts for clarity sake.
Figures 3a to 3d show images of the scene acquired for the embodiment of Figure 2, where the images differ from each other in that they are obtained while focusing on different post signs.
Figure 4 schematically shows an arrangement of electric-heating elements, particularly resistors, which implement the heating elements of the system of the second aspect of the invention for an embodiment for which every resistor has its positive voltage and a ground being able to individually control its power and every element is made of the same material and in the same layer of deposition.
Figure 5 shows a GUI (Graphical User Interface), implemented in the screen of the system of the second aspect of the invention, that controls the different regions of the image in real time. In this case a manual handler or a numeric box allows to choose the intensity of the focal power for each lens of the 2D array of lenses.
Figure 6 shows two images of a black and white grid used to calibrate the system of the second aspect of the invention, for an embodiment, where the right image is sharper than the left one.
Figure 7 is a graph which represents the voltage needed to achieve maximum image sharpness of an object at a certain distance, using the method and system of the second aspect of the invention, for an embodiment.
Figure 8 is a graph which shows the linear evolution of a segment of the graph shown in Figure 7.
Figure 9 show the images of three objects placed at random distances in front of the camera comprised by the system of the second aspect of the invention, which has been used to validate the calibrate curve shown in Figure 8.
Figure 10 shows an arrangement of the system of the second aspect of the invention, for an embodiment for which a camera objective is placed between an object (in this case a flower) and the thermo-optical lenses. An image of the real object and also the image obtained at the image/camera sensor are depicted below the system arrangement.
Figure 11 shows another arrangement of the system of the second aspect of the invention, for an embodiment for which no objective is placed between the object (in this case a flower) and the thermo-optical lenses and image sensor. An image of the real object and also the image obtained at the image/camera sensor are depicted below the system arrangement.

### DESCRIPTION OF THE PREFERRED EMBODIMENTS

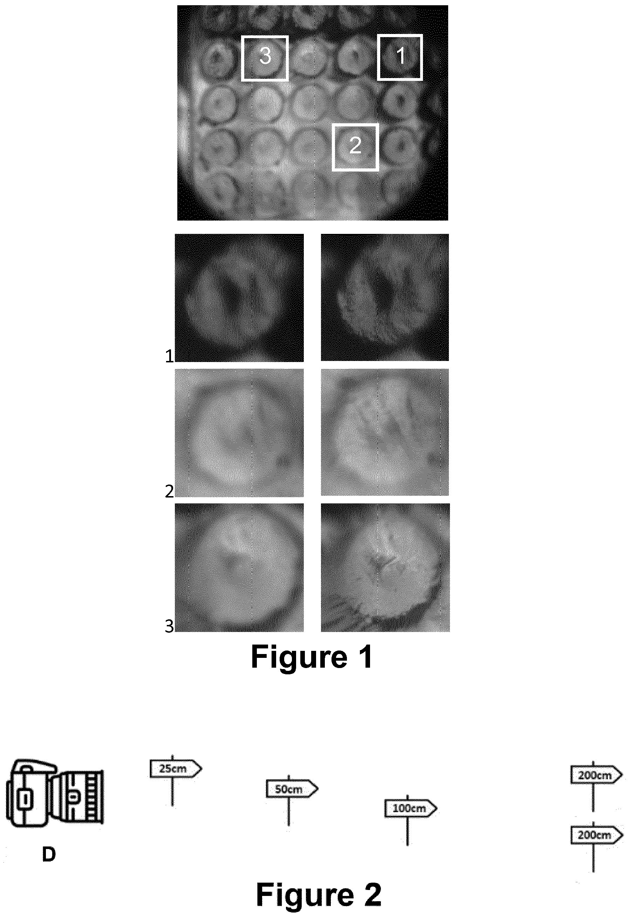

The images shown in Figure 1 have been obtained by a microscope implementing the system of the second aspect of the present invention, from a sample made of small transparent plastic pillars of different height (ranging from 0 to 1 mm). By activating separately the thermo-optical lenses of array of lenses of the system, by individually generating and applying the required excitation signals to the associated heating elements, adjusting individually the electric sourcing when the heating elements are resistors, the thermo-optical lenses are focused on the top pinpointed pillars of different height that would otherwise be out of focus.

Particularly, those pillars boxed in boxes 1, 2 and 3 in the top image of Figure 1 are selected for the illustrated embodiment. In said top view all the details of the image are out of focus, while for the three pairs of images below each of the boxed pillars is shown, particularly pair 1, pair 2 and pair 3. Each of said pairs of images shows at left the image of the corresponding pillar out of focus, i.e. before activating the corresponding thermo-optical lens, and at right the image of the pillar once focused by activating the corresponding thermo-optical lens (i.e. by supplying the corresponding excitation signal to the associated heating element).

The three pillars 1, 2, 3, which have different heights, are therefore focused simultaneously and their heights are directly measured by analysing the excitation signals as described in a previous section, without the need of including any measuring sensor of additional mechanism to the microscope. In this case, more than the distances from the top of the pillars 1, 2, 3 to the lens (or to an optical element arranged in between), the distances of interest to be measured are those related to the whole height of each pillar, including the thickness of the plate from which the pillars extend.

In Figure 2 another embodiment of the system of the second aspect of the invention is shown, in this case where the system is implemented by means of a camera D, which is aimed at different post signs placed at different known distances from the camera D and carrying a label signalling the corresponding distance (25, 50, 100 and 200 cm).

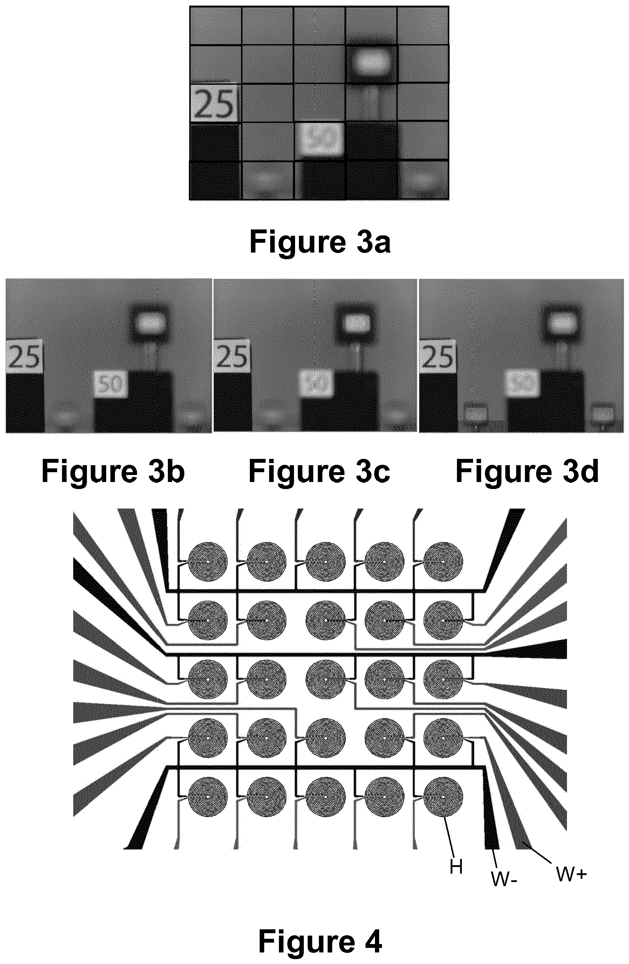

Figures 3a to 3d show images of the scene acquired for the setup of Figure 2, to prove the capacity of the system of the second aspect of the present invention in photography applications.

Particularly, Figure 3a shows an image of the scene aimed by the camera D with the post sign placed at 25 cm focused, and the rest of post signs out of focus. A grid has been overlapped to the image shown in Figure 3a, representing a possible interface shown in a touchscreen of the camera D, so that a user can select the desired box of the grid to focus on the target placed therein.

Figures 3b, 3c and 3d show further images of the scene aimed by the camera D with different post signs focused at the same time, specifically post signs placed at 25 cm and 50 cm in Figure 3b, posts signs placed at 25 cm and 100 cm in Figure 3c, and post sign placed at 25 cm and the two post signs placed at 200 cm in Figure 3b.

The image shown in Figure 3d proves that by the present invention two targets placed at the same distance, i.e. at the same focal plane, but at different locations can be focused at the same time by two different thermo-optical lenses.

As described in a previous section, it is possible to calibrate the distance by recording the electrical sourcing (or light sourcing) required to focus the relevant thermo-optical lens on the sign post in its area of influence. In this way, the distance to an object between the posts could be calculated from the electrical current required to focus on it and comparing it with the calibration, so that a univocally related distance value is obtained (generated, for example, by means of the interpolation process described in a previous section of the present document).

A prototype of the system of the second aspect of the present invention has been built by the present inventors, with the following constructional features, constraints and requirements.

Focal length variation is determined by the temperature gradient applied to a thermo-optical material. This material will vary its focus depending on the variables dn/dT and the thermal conductivity. In this case limiting variables for the material are: solid state, transparent to visible light (90% or more), high dn/dT and thermal conductivity, electrically insulating and able to adjust to textured surfaces.

In the built prototype, individual focuses are controlled by the heat transferred to the thermo-optical materials from a complex array of resistors using digital potentiometers, and/or switches and/or and multiplexers (not shown). Control can be individual, total or by groupings. Actual control is made by a python server that keeps track of live image and values of the electrical currents passed through the resistors.

Figure 4 shows a possible arrangement for that array of resistors H. Every resistor has its positive voltage connection W+ and a ground connection W- being able to individually control its power. For an embodiment, every element H is made of the same material and in the same layer of deposition.

The connection network formed by the different connection tracks W+ and W-, can be a reconfigurable connection network, like a FPGA, which can provide different alternate connection arrangements.

For the built prototype all the technology is built by 2D lithography, so that the space required is minimal and can be embedded on any surface. Current substrate is a silica (although other potential materials could be used) of about 1 cm², on top of it a network of resistive material, such as transparent ITO or metal such as gold, with a thickness of 50 nm is arranged. Size of the individual resistors may vary from few µm up to hundreds of µm depending on the applications.

Transparency of the system is enough to be placed inside of the optical path, avoiding any extra tool and highly reducing its size.

### Performance of the built prototype:

Response times of the focus may vary from few µs to hundreds of ms depending on resistor size, having an active heating system and passive cooling.

Sharpness of the image is detected through object sharpness, it can either be done manually or automatically. In manual tests targets such as words or numbers are used to identify when focus has been properly adjusted. For an automatic focus different areas of the image are individually studied, sharpness transition between objects under a grey scale image defines whether it is properly focused.

The focus of the system of the second aspect of the invention can actively be adjusted to identify further images, and passively go back to the initial lens focus position. The range of distances depends on the needs of the user and is mainly limited by the collecting optics associated with the system.

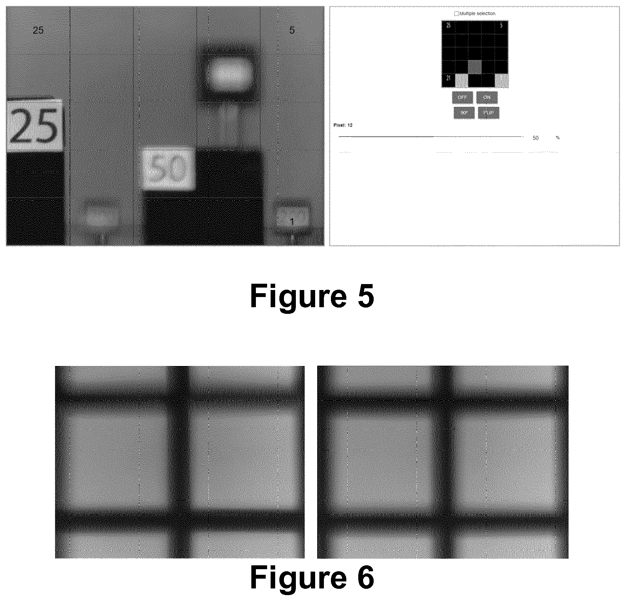

Figure 5 shows a GUI (Graphical User Interface), implemented in the screen of the system of the second aspect of the invention, that controls the different regions of the image in real time. In this case a manual handler or a numeric box allows to choose the intensity of the focal power for each lens of the 2D array of lenses. 25 boxes form the grid shown in the screen over the image, duly identified by respective number referrals (only referrals 1, 5, 21 and 25 are shown in the figure) on the grids overlapping both the image of left view and the image of right view. For the left view image, only the element included in box 23 is in focus (that including post "25") while for the image of the right view several boxes are selected, particularly boxes 1, 9, 12 and 23, to control the corresponding lenses to focus on the elements included in said boxes (posts "25", "50", "100" and "200").

The interface could also include a virtual grid (not shown) which could include further controllable elements to control further options for each box, such as OFF/ON (i.e. activating or deactivating the corresponding box of the grid), flip 90° rotation, and intensity of the voltage supplied to the corresponding thermo-optical lens.

As already stated above, the system of the second aspect of the present invention is able to scale, making it available to work in different formats. Two main paths have been explored: microscopy and photography.

With working prototypes, in microscopy, a maximum focus shift of around 1 mm has been achieved with working prototypes (that is more than the depth of field of the microscope), while in photography a maximum focus shift of 175 cm has been achieved so far (also more than the depth of field of the photographic system).

A compact implementation, without the need of reimaging system, is possible when the thermo-optical lens size matches the imaging sensor size. In this case, the thermo-optical lens can be placed very close to the image sensor.

### Use cases:

Quality control is highly related to the appearance or the dimensional stability of products. The system of the second aspect of the present invention is able to provide both controls to those parameters in one. It is also versatile in terms of size and adaptability to different platforms.

As an example the surface of a kayak hull has been studied, and different virtual images from the obtained image and distance information were generated, for an embodiment applied to quality control, in this case applied to a manufactured boat.

Particularly, an image was taken from the top view of the boat, in this case a kayak hull. Image is then autofocused until reaching maximum border sharpness. A heat map with the different values applied to the electrodes is generated. With a CAD software a 3D surface is generating using the heat map. 2D image is placed on top of the 3D surfaces allowing the user to analyze whether the geometry has been properly fabricated.

Following the quality control field, another example where both image and geometry are combined is wood cutting or carving. Controlling wood shape plus the wood grain drawing can lead to better products.

Another field that would take advantage of the present invention is that related to topographic cameras, which could real time generate fields in a 3D environment. Limitations on this field would depend on the distances that the thermo-optical lens would be able to adjust with its focal length.

In order to broaden the capabilities of the present invention in terrain analysis, and due to its compactness, a camera implementing the system of the invention can be mounted on a drone. Real time data analysis could improve flight quality and also provide information about the environment.

Compactness is also linked to mobile technologies. An advanced version of the system of the invention will be directly deposited on the imaging sensor. Removing parts such as the glass substrate reduces thickness of the system in a great way, still there is a long way to explore the integration of circuitry over imaging chips.

The distance measuring proposed by the present invention is based on the analysis of the power being fed into heating elements of the lens to change its focal length, until the target is optimally focused, which is checked, for example, by analysing the sharpness of the images obtained, so that when a highest sharpness is obtained the target is determined to be optimally focused.

In order to calibrate the system, a study of image sharpness vs. object distances needs to be done as for every different optical configuration values will change.

To calibrate it, an 8 bits object such as a black and white grid will serve as an easy and fast tool to analyse subject.

An 8 bits histogram of the image will serve as a quantification of the sharpness of the image, the standard deviation between pixels gives the information needed to know whether colour transitions are sharp enough. First, the image is changed to grey scale meaning the colour value of the pixel is 0 to 255. Then the histogram of the zone to be analysed is made, if there is a great difference between pixels it means the colour changes are sharp and a high standard deviation will be obtained, and consequently that zone will be in focus.

Figure 6 show two images from the black and white grid that may look the same to human eye but there is a slight difference, right image has sharper lines than left one, this is measured using the histogram method.

For the calibration process two parameters are being changed, object distance and resistor voltage.

For every distance the object is positioned, a series of images ranging the minimum voltage admissible for the resistor to the maximum are being taken.

These images are afterwards analysed and for every voltage a sharpness value is given.

Peak sharpness apply to a certain voltage, this peaks refer to the maximum image quality that can be achieved using the thermo-optical effect of the thermo-optical lens of the system of the invention, for a working prototype.

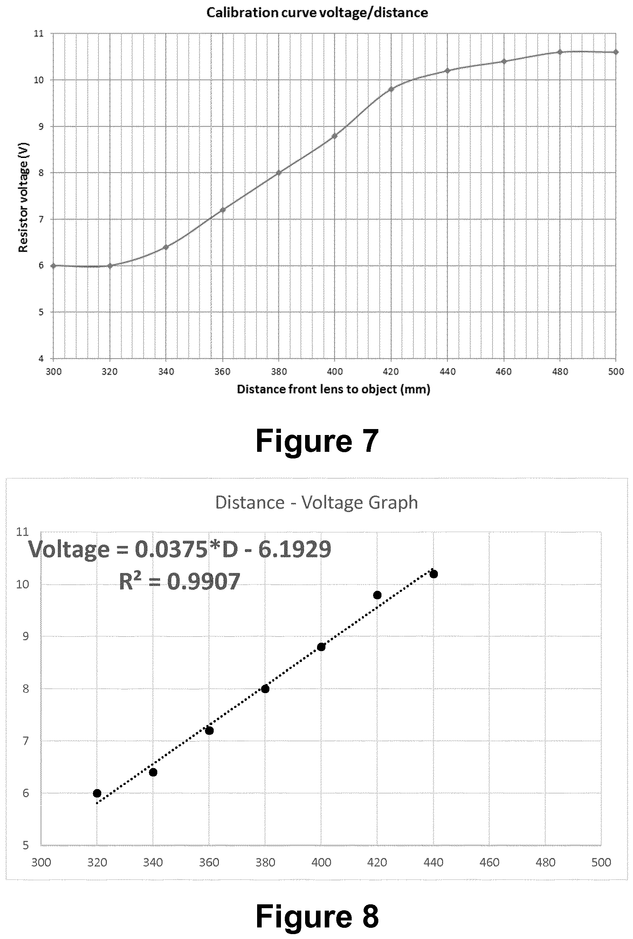

Figure 7 is a graph which represents the voltage needed to achieve said maximum image quality of an object at a certain distance, using the method and system of the second aspect of the invention, for an embodiment. The depicted graph can be divided in three zones, pre-effect with threshold for an object distance at 320 mm, linear evolution between 320 and 440 mm and an evolution tending to saturation beyond 440 mm.

Once the calibration table is set there is only needed to take images of random objects at distances inside the linear evolution of the graph to check if the system works properly.

Figure 8 is a graph showing said linear evolution of a segment of the graph shown in Figure 7, including pairs of values measured during the calibration process, and also several other interpolated intermediate pairs of values. This segment of the graph that has a linear evolution is useful to study change of focus/distance and the slope helps quantifying the exact position of the target(s). The high value of R2 means very good interpolation. Other types of interpolated but not linear evolutions could be used instead of the depicted linear evolution, as long as a regression can be fit.

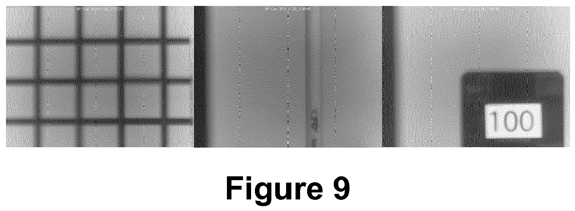

Figure 9 show the images of three objects placed at random distances in front of the prototype camera comprised by the system of the second aspect of the invention, for an embodiment, from left to right: grid, pencil, "100" post sign.

For the grid, the best-focused image is obtained for a voltage of 8.6 V applied to the corresponding thermo-optical lens and for the pencil and the "100" sign a value of 6.6 V. Using the calibration curve we deduce that 8.6 V corresponds to a distance of 396 mm for the gird and 6.6 V corresponds to a distance of 346 mm for the two other objects. The positions of these 3 objects have been previously measured with a ruler: 390 mm for the grid and 350 mm for the two other objects giving an error/uncertainty of 4 mm for the grid and 6 mm for the two other objects.

As we are working under a pixelated lens various measurements can be taken at once, not only we can calculate the distance between the object and the camera but also the relative distance between objects in the scene.

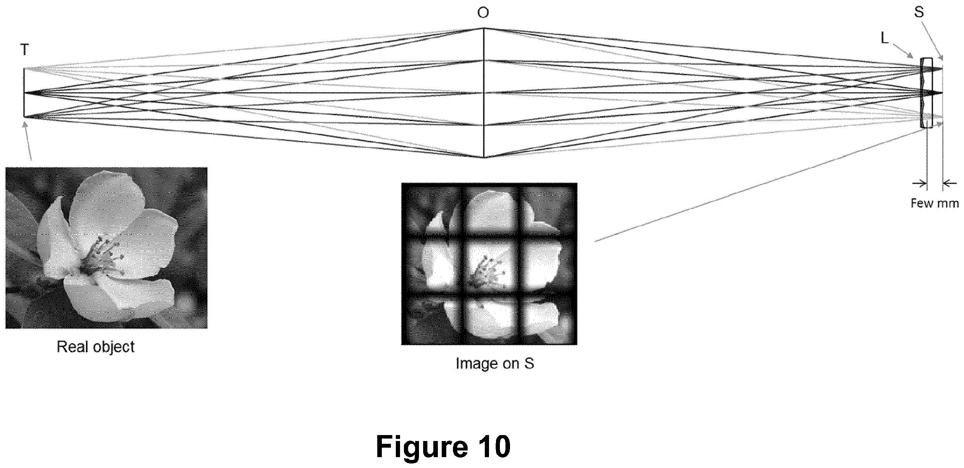

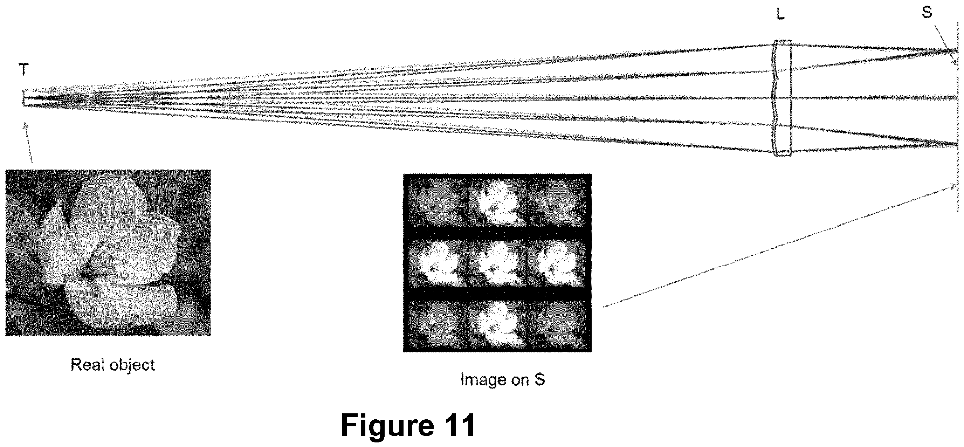

Finally, Figures 10 and 11 show two alternative arrangements of the system of the second aspect of the invention already described in a previous section, both including a 2D lens array L and an image sensor S comprising a 2D array of effective pixels.

Specifically, for the arrangement shown in Figure 10 (called below first arrangement) a camera objective O is placed between an object T (in this case a flower) and the 2D array of thermo-optical lenses L and image sensor S (separated a few mm). An image of the real object T and also the image obtained at the image/camera sensor S (this image should be reversed, 180° rotation, but for convenience it has been put back in the vertical object direction) are depicted below the system arrangement.

For the arrangement of Figure 10, the image is formed on the image sensor S, and, as the lens L is placed only a few mm thereof, said image is "almost formed" on the lens L, which allows to split the image in different portions where each portion is independently controlled by a unique micro-lens, i.e. by one of the thermo-optical lenses of the 2D lens array L, as shown in Figure 10 in the image identified as "Image on S". For this arrangement, the distance to be measured once the object T is focused in the image sensor S is the distance from the object T to the camera objective O (the distances between the camera objective O and the lens L and image sensor S are fixed and known). In this case, therefore, the calibration process described above is performed for distances between targets T and the front side of the camera objective O.

An alternative arrangement is shown in Figure 11 (called below second arrangement), for an embodiment for which no objective is placed between the object T (in this case a flower) and the 2D array of thermo-optical lenses L and image sensor S, which in this case are separated more than a few mm. An image of the real object T and also the image obtained at the image/camera sensor S (this image should be reversed, 180° rotation, but for convenience it has been put back in the vertical object direction) are depicted below the system arrangement.

For the arrangement of Figure 11, each thermo-optical lens of the 2D array of thermo-optical lenses L collect the light of the entire object scene T on the image sensor S. It results on a series of images formed on the image sensor. The number of images is given by the number of thermo-optical lens of the 2D array of thermo-optical lenses L. Note that this is a different arrangement than the one depicted in Figure 11 where each thermo-optical lens of the 2D array of thermo-optical lenses L collect the light from a different part/region of the object scene T and then only one image is formed on the image sensor S. Indeed the thermo-optical lens located at the centre (respectively at the top left-hand corner) of the array of thermo-optical lenses L collect light coming from the centre (respectively at the top left-hand corner) of the object scene T. In case of convergent lens no extra lens is required between the array of thermo-optical lenses L and the image sensor S or image formation (for other purpose, like image corrections, extra lens could be inserted). In case of divergent lenses, an extra convergent lens (or a set of lenses) would be required between the 2D array of thermo-optical lenses L and the image sensor S in order to form the image of the object scene T on the image sensor S.

Depending on the application, the first or second arrangement shown in Figures 10 and 11 can be chosen. For example, for a 3D reconstruction of the object scene T or for any application for with a higher image quality is desired, it could be better to select the arrangement of Figure 11 in order to avoid the undesired hiding of image information which occurs for the arrangement of Figure 10 in those boundary zones between thermo-optical lenses, and other possible issues in the overlap of the images from different optical lenses.

However, when a more accurate selection of the target to be focused, in order to measure its distance, is required (particularly when the targets are in the same focal plane), the arrangement of Figure 10 is preferred, as the different possible targets of the scene (in this case parts of a flower) are independently selectable. This arrangement also has the benefits of the sensed image having more brightness than for the arrangement of Figure 12 where the whole brightness is divided into each thermo-optical lens of the 2D lens array L.

A person skilled in the art could introduce changes and modifications in the embodiments described without departing from the scope of the invention as it is defined in the attached claims.

## Claims

1. A method for measuring a distance to a target, comprising:
a) supplying an excitation signal to a heating element in thermal contact with a thermo-optical material of a thermo-optical lens to change the focal length of said thermo-optical lens to focus on a target; and
b) analysing said supplied excitation signal or a control signal originating the same, to determine, based at least on the magnitude of said analysed signal, a distance between said focused target and one of said thermo-optical lens and an optical element arranged in an optical path going from the target to the thermo-optical lens.

2. The method according to claim 1, comprising supplying, as said excitation signal, an electric excitation signal to said heating element which is an electric-heating element in thermal contact with a thermo-optical material of the thermo-optical lens.

3. The method according to claim 1, comprising supplying, as said excitation signal, a light excitation signal to said heating element which is a photo-heating element in thermal contact with a thermo-optical material of the thermo-optical lens.

4. The method according to claim 3, comprising supplying said control signal to a controllable light source to obtain said light excitation signal, wherein said control signal is an electric control signal, and said controllable light source is an electrically controlled light source.

5. The method according to claim 3 or 4, wherein said photo-heating element comprises at least one photo absorbing particle in thermal contact with a thermo-optical material of the thermo-optical lens, and the method comprises controlling said controllable light source, by means of said control signal, for illuminating the at least one photo absorbing particle with at least one spectral component which can be absorbed by the at least one photo-absorbing particle.

6. The method according to any of the previous claims, comprising measuring a plurality of distances to a corresponding plurality of targets, wherein:
said step a) comprises supplying a plurality of excitation signals respectively to a plurality of heating elements in thermal contact with thermo-optical materials of a corresponding plurality of thermo-optical lenses to change the focal length of each of the plurality of thermo-optical lenses to focus on each of said targets of the plurality of targets; and
said step b) comprises analysing said supplied excitation signals or control signals originating the same, to determine, based at least on the magnitude of said analysed signals, said plurality of distances between each of the focused targets and:
- each of the thermo-optical lenses; or
- an optical element arranged in an optical path going from the target to the thermo-optical lens.

7. The method according to claim 6, wherein said corresponding plurality of thermo-optical lenses are arranged forming a 2D lens array.

8. The method according to any of the previous claims, further comprising acquiring images of the focused targets by means of an image sensor arranged and configured to collect light coming from the target or targets once said light has passed through the thermo-optical lens or lenses or has been reflected thereon, and to sense images of said target or targets from the collected light, wherein at said step a) said change of the focal length of the thermo-optical lens to focus on a target or targets refers to focus said target or targets on said image sensor.

9. The method according to claim 8 when depending on claim 7, comprising performing a three-dimensional reconstruction from the images acquired with the image sensor and from the distances determined at step b).

10. The method according to any of the previous claims, comprising performing previously to said steps a) and b), a calibration process for each of said thermo-optical lenses, wherein said calibration process comprises separately supplying a plurality of excitation signals to a plurality of corresponding heating elements to change the focal lengths of the thermo-optical lenses to focus on different targets, and build a calibration relationship data structure univocally relating, for each thermo-optical lens, each supplied excitation signal, or control signal originating the same, with the distance between the corresponding focused target and one of the respective thermo-optical lens and optical element arranged in the corresponding optical path, and wherein said determination of said distance of step b) is performed by looking up in said calibration relationship data structure the value of the magnitude of the analysed signal to find a univocally related distance value.

11. The method according to any of the previous claims, comprising building said calibration relationship data structure including only those pairs of values, distance versus supplied excitation signal or control signal originating the same, which follow any kind of fitting interpolation as long as it is repetitive and quantitative.

12. The method according to any of the previous claims, comprising performing an autofocus process during or previously to said step a) up to find an optimal focal length for said thermo-optical lens to focus on said target, and using the excitation signal corresponding to said optimal focal length in steps a) and b).

13. A system (D) for measuring a distance to a target, adapted to implement the method of any of claims 1 to 12, and which comprises at least:
- a heating element (H);
- a thermo-optical lens (L) comprising a thermo-optical material in thermal contact with said heating element (H) to change the focal length of said thermo-optical lens when heated by said heating element (H);
- an excitation signal generating unit adapted and arranged to supply an excitation signal to said heating element (H) to heat the thermo-optical material to change the focal length of the thermo-optical lens (L) to focus on a target (T); and
- an analysing unit configured and arranged to analyse said supplied excitation signal or a control signal originating the same, to determine, based at least on the magnitude of said analysed signal, a distance between said focused target (T) and one of said thermo-optical lens (L) and an optical element (O) arranged in an optical path going from the target (T) to the thermo-optical lens.

14. The system according to claim 13, further comprising an image sensor (S) arranged and configured to receive light coming from the target (T) or targets once said light has passed through the thermo-optical lens (L) or lenses or has been reflected thereon, and to sense images of said target (T) or targets from the received light.

15. A computer program, including code instructions that when executed on at least one processor implement the steps of the method of the invention according to any of claims 1 to 12, including the control of the operation of an excitation signal generating unit to supply excitation signals, and the analysis of data representing at least the magnitude of the supplied excitation signals.
